# EUROPÄISCHE PATENTSCHRIFT

(11) **EP 2 480 481 B1**
(45) Veröffentlichungstag und Bekanntmachung des Hinweises auf die Patenterteilung: **20.04.2016**
(21) Anmeldenummer: 10765372.7
(22) Anmeldetag: 22.09.2010
(51) Int. Cl.: B66C 13/14, B66C 19/00, H02G 11/00, B65H 75/36

(54) **PORTALHUBWAGEN MIT EINER KABELSPANNVORRICHTUNG**
STRADDLE CARRIER COMPRISING A CABLE-CLAMPING DEVICE
CHARIOT CAVALIER À DISPOSITIF TENDEUR DE CÂBLE

(30) Priorität: 24.09.2009 DE 102009042853
(43) Veröffentlichungstag der Anmeldung: 01.08.2012
(73) Patentinhaber: Pfenning Elektroanlagen GmbH, 97199 Ochsenfurt (DE)
(72) Erfinder: GIESE, Peter, 91074 Herzogenaurach (DE)
(74) Vertreter: Lelgemann, Karl-Heinz
(86) Internationale Anmeldenummer: PCT/EP2010/005786
(87) Internationale Veröffentlichungsnummer: WO 2011/035894

(56) Entgegenhaltungen:
- WO-A1-2009/075569
- DE-A1- 3 147 655
- DE-U1- 8 416 931
- JP-U- 53 056 678
- JP-U- H01 123 687

## Beschreibung

Die Erfindung bezieht sich auf einen Portalhubwagen (Straddle Carrier) zum Einsatz in Containerterminals und für allgemeine Transportaufgaben, mit einem Rahmengestell mit vertikalen Stützen, einem Spreader, der zwischen den vertikalen Stützen des Rahmengestells und mit einem Container verriegelbar ist, Hubwinden, mittels denen der Spreader vertikal bewegbar ist, Fahrträgern, die am unteren Bereich des Rahmengestells angeordnet sind und jeweils eine Vielzahl in einer Reihe angeordneter Räder aufweisen, und einem Energieversorgungs- und/oder Signalleitungskabel, mittels dem der Spreader an eine Energieversorgungsquelle und/oder eine Steuereinheit des Portalhubwagens angeschlossen ist.

Bei bekannten derartigen Portalhubwagen erfolgt die Einspeisung meist hydraulischer Energie sowie die Weiterleitung von Steuersignalen etc. an spreaderseitige Aggregate, Bauteile ud.dgl. mittels eines Energieversorgungs- und/oder Signalleitungskabels, wobei die Anbindung üblicherweise mittels Kabelscheren oder Schleppketten realisiert ist. Abgesehen davon, dass diese Art und Weise der Einspeisung von elektrischer Energie und von Steuersignalen zum Spreader mit einem nicht unbeträchtlichen Wartungsaufwand einher gehen kann, bergen derartige Kabelscheren und Schleppketten den Nachteil, dass sie die Sicht des Fahrers des Portalhubwagens teilweise stark beeinträchtigen können.

WO2009/075569 ofenbart einen Portalhubwagen gemäß dem Oberbegriff des Anspruchs 1. JP 1-123687 U offenbart eine Transportvorrichtung mit einem Energieversorgungs- und/ oder Signalleitungskabel, mittels dem der Spreader an eine Energieversorgungsquelle und/oder eine Steuereinheit der Transportvorrichtung angeschlossen und dem eine Kabelspannvorrichtung zugeordnet ist, mittels der das Energieversorgungs- und/oder Signalleitungskabel straffbar ist. Ausgehend von dem vorstehend geschilderten Stand der Technik liegt der Erfindung die Aufgabe zugrunde, den eingangs geschilderten Portalhubwagen zum Einsatz in Containerterminals derart weiterzubilden, dass einerseits der Wartungsaufwand für die Energie- und Signaleinspeisung zum Spreader reduziert ist und andererseits die Sichtverhältnisse des Fahrers des Portalhubwagens verbessert sind.

Diese Aufgabe wird erfindungsgemäß dadurch gelöst, dass dem Energieversorgungs- und/oder Signalleitungskabel zum Spreader eine Kabelspannvorrichtung zugeordnet ist, die nahe bzw. im Bereich einer spreaderseitigen Anbindung des Energieversorgungs- und/oder Signalleitungskabels angeordnet ist und mittels der das Energieversorgungs- und/oder Signalleitungskabel straffbar ist. Ferner sind die Kabelspannvorrichtung und das Energieversorgungs- und/oder Signalleitungskabel zum Spreader zumindest teilweise in einer vertikalen Stütze des Rahmengestells angeordnet. Mittels der Kabelspannvorrichtung wird das Energieversorgungs- und/oder Signalleitungskabel dauerhaft und in jeder Position des Spreaders gestrafft, so dass sich durch den zum Spreader führenden Abschnitt des Energieversorgungs- und/oder Signalleitungskabels allenfalls eine sehr geringe Beeinträchtigung der Sichtverhältnisse ergibt, da sich dieser Abschnitt in vollständiger Länge immer unmittelbar im Bereich der spreaderseitigen Anbindung des Energieversorgungs- und/oder Signalleitungskabels befindet.

Wenn die Kabelspannvorrichtung insgesamt und das Energieversorgungs- und/oder Signalleitungskabel zum Spreader zumindest teilweise in einer vertikalen Stütze des Rahmengestells angeordnet sind, ist sichergestellt, dass ausschließlich derjenige Abschnitt des Energieversorgungs- und/oder Signalleitungskabels außerhalb der vertikalen Stütze verläuft bzw. angeordnet ist, der notwendig ist, um den Abstand zwischen der jeweils vertikalen Position des am Rahmengestell in Vertikalrichtung verstellbaren Spreaders einerseits und dem Austritt bzw. der Austrittöffnung, durch den bzw. die hindurch das Energieversorgungs- und/oder Signalleitungskabel spreaderseitig aus der vertikalen Stütze austritt, abzudecken. Hierdurch wird zum einen sichergestellt, dass stets nur derjenige Abschnitt des Energieversorgungs- und/oder Signalleitungskabels äußeren klimatischen Verhältnissen, wie Sonne, UV-Strahlung, Regen, Feuchtigkeit, Schnee, Eis etc. ausgesetzt ist, der außerhalb der vertikalen Stütze angeordnet ist, wodurch sich eine Reduzierung des Verschleisses, von auf äußere Einflüsse zurückgehenden Beschädigungen etc. und damit eine weitere Verringerung des Wartungs- und Reparaturaufwands ergibt, wobei zum anderen in optimaler Weise erreicht wird, dass etwaige Sichtbehinderungen, die auf das Energieversorgungs-und/oder Signalleitungskabel zurückgehen, minimiert bzw. beseitigt sind.

Vorteilhaft weist die Kabelspannvorrichtung eine im Bereich eines oberen Endabschnitts einer vertikalen Stütze angeordnete feststehende Umlenkrolle auf, um die das Energieversorgungs- und/oder Signalleitungskabel geführt ist. Von dieser Umlenkrolle aus kann das Energieversorgungs- und/oder Signalleitungskabel dann auf kürzestem Weg in die spreaderseitige Anbindung einlaufen.

Zum Längenausgleich des Energieversorgungs- und/oder Signalleitungskabels bei Vertikalbewegungen des Spreaders kann die Kabelspannvorrichtung vorteilhaft eine unterhalb der Umlenkrolle in Vertikalrichtung bewegliche Spannrolle aufweisen, auf die das Energieversorgungs- und/oder Signalleitungskabel geführt ist und von der aus das Energieversorgungs- und/oder Signalleitungskabel zur Umlenkrolle geführt ist.

In konstruktiv-technisch wenig aufwändiger Weise kann eine in jeder Position der Spannrolle korrekte Positionierung derselben erreicht werden, wenn die Spannrolle der Kabelspannvorrichtung auf einer vertikalen, vorzugsweise als Leitstange ausgebildeten Führung in Vertikalrichtung beweglich ist. Die Führung bzw. Leitstange kann in geeigneter Weise an der vertikalen Stütze befestigt sein und sie kann sich quasi über die gesamte Vertikalabmessung der vertikalen Stütze erstrekken, die zum Längenausgleich des Energieversorgungs- und/oder Signalleitungskabels bei den möglichen Vertikalpositionen des Spreaders benötigt wird.

Eine zuverlässige Funktion der Spannvorrichtung wird erreicht, wenn die Spannrolle drehbar an einem Gegengewicht sitzt, das in Vertikalrichtung verschieblich an der Leitstange geführt ist. Hierdurch wird aufgrund der Gewichtskraft des Gegengewichts stets eine straffe Führung des Energieversorgungs- und/oder Signalleitungskabels erreicht, so dass Beschädigungen aufgrund von Schleifvorgängen etc. zuverlässig verhindert werden können.

Hierzu ist es vorteilhaft, wenn das Energieversorgungs- und/oder Signalleitungskabel aus der vertikalen Stütze bzw. von der vertikalen Stütze aus in die spreaderseitige Anbindung bzw. in eine spreaderseitige Führung einläuft. Sichtbar ist dann nur derjenige Abschnitt des Energieversorgungs- und/oder Signalleitungskabels, der unbedingt erforderlich ist, um den Längenausgleich zu bewerkstelligen, der sich aus den unterschiedlichen aktuellen Vertikalpositionen des Spreaders in Bezug auf das Rahmengestell des Portalhubwagens ergibt.

Zur kontrollierten Führung und Anordnung des Energieversorgungs- und/oder Signalleitungskabels wird dieses innerhalb der vertikalen Stütze des Rahmengestells durch die Kabelspannvorrichtung geführt und gestrafft, so dass sich durch denjenigen Abschnitt des Energieversorgungs- und/oder Signalleitungskabels, der zwischen dem spreaderseitigen Kabelausgang aus der vertikalen Stütze und dem Spreader angeordnet ist, keine Beeinträchtigung der Sichtverhältnisse ergibt, da sich dieser Abschnitt in vollständiger Länge immer unmittelbar an der vertikalen Stütze befindet. Darüber hinaus wird hierdurch erreicht, dass in jeder Vertikalposition des Spreaders der größtmögliche Längenabschnitt des Energieversorgungs- und/oder Signalleitungskabels innerhalb der vertikalen Stütze des Rahmengestells und damit gegen schädliche äußere Einflüsse geschützt ist.

Gemäß einer weiteren vorteilhaften Ausführungsform des erfindungsgemäßen Portalhubwagens ist die Umlenkrolle der in der vertikalen Stütze des Rahmengestells angeordneten Kabelspannvorrichtung im oberen Endabschnitt der vertikalen Stütze angeordnet, wobei das Energieversorgungs- und/oder Signalleitungskabel von der Umlenkrolle aus spreaderseitig aus der vertikalen Stütze austritt. Der spreaderseitige Kabelaustritt aus der vertikalen Stütze verläuft somit mittels der Umlenkrolle mechanisch störungsfrei. Die feststehende Umlenkrolle ist dabei zweckmäßigerweise so an bzw. in der vertikalen Stütze angeordnet, dass der Ablauf des Versorgungs- und/oder Signalleitungskabels von der feststehenden Umlenkrolle auf einem Ablaufsektor derselben erfolgt, der außerhalb des Hohlraums der vertikalen Stütze angeordnet ist.

Gemäß einer weiteren vorteilhaften Ausführung des erfindungsgemäßen Portalhubwagens ist das Energieversorgungs- und/oder Signalleitungskabel nach dessen Eintritt in die vertikale Stütze zu der in Vertikalrichtung beweglichen Spannrolle der in der vertikalen Stütze des Rahmengestells angeordneten Kabelspannvorrichtung und von dort aus zur Umlenkrolle geführt. Der Längenausgleich des Energieversorgungs- und/oder Signalleitungskabels erfolgt durch die Änderung der Vertikalposition dieser Spannrolle innerhalb der Stütze, so dass an dem Kabeleintritt des Energieversorgungs- und/oder Signalleitungskabels in die vertikale Stütze keine mechanischen Beanspruchungen auftreten, da dort eine Relativbewegung zwischen dem Energieversorgungs- und/oder Signalleitungskabel einerseits und der vertikalen Stütze bzw. dem in dieser ausgebildeten Kabeleintritt andererseits nicht stattfindet.

Für Ausführungsformen des erfindungsgemäßen Portalhubwagens, bei denen die Kabelspannvorrichtung innerhalb der vertikalen Stütze des Rahmengestells angeordnet ist, ist es vorteilhaft, wenn die vertikale, vorzugsweise als Leitstange ausgebildete Führung in der vertikalen Stütze des Rahmengestells angeordnet ist.

Im Folgenden wird die Erfindung anhand einer Ausführungsform unter Bezugnahme auf die Zeichnung näher erläutert.

Es zeigen:
- Figur 1: eine Prinzipdarstellung eines erfindungsgemäßen Portalhubwagens (Straddle Carrier);
- Figur 2: eine Schnittdarstellung einer vertikalen Stütze des in Figur 1 gezeigten Portalhubwagens mit einer darin angeordneten Kabelspannvorrichtung; und
- Figur 3: eine Ansicht von oben in die in Figur 2 gezeigte vertikale Stütze.

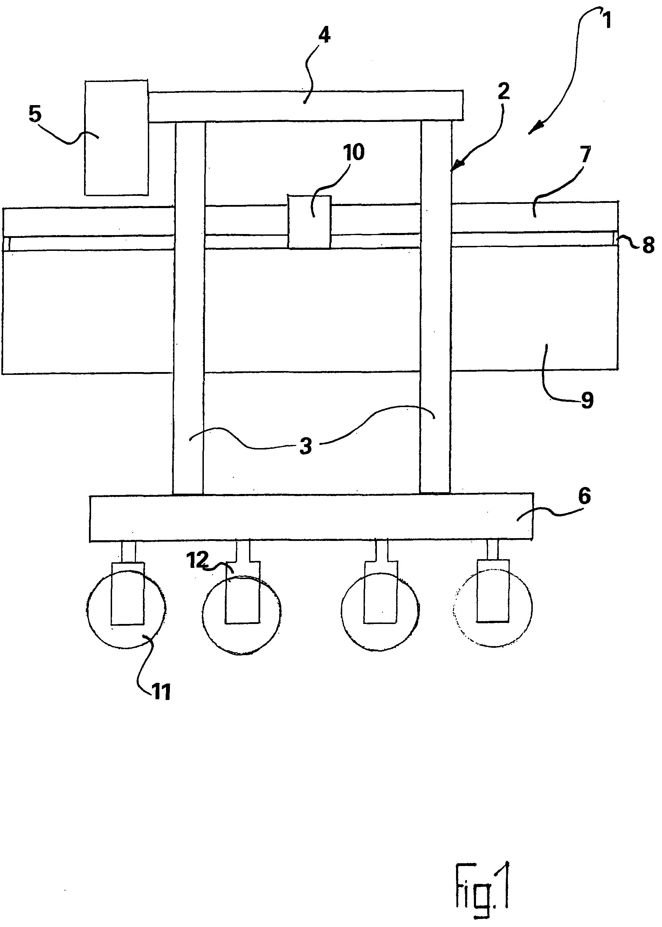

Eine anhand der Figuren 1 bis 3 im Folgenden näher erläuterte Ausführungsform eines erfindungsgemäßen Portalhubwagens (Straddle Carrier) 1 hat ein Rahmengestell 2, zu dem im dargestellten Ausführungsbeispiel vier vertikale Stützen 3 gehören. Am oberen Ende der vertikalen Stützen 3 sitzt ein Oberrahmen 4 des Portalhubwagens 1, an dem eine Fahrerkabine 5 vorgesehen ist, aus der heraus eine Bedienungsperson des Portalhubwagens 1 diesen fahren bzw. steuern kann.

An den unteren Enden zweier auf einer Seite des Portalhubwagens 1 angeordneter vertikalen Stützen 3 ist jeweils ein Fahrträger 6 vorgesehen, wobei in Figur 1 lediglich einer der beiden Fahrträger 6 und zwei der vier vertikalen Stützen 3 sichtbar sind.

Zu dem Portalhubwagen 1 gehört ein Spreader 7, der zwischen den vertikalen Stützen 3 des Rahmengestells 2 bzw. zwischen den Fahrträgern 6 des Portalhubwagens 1 angeordnet ist. Der Spreader 7 ist durch geeignete Verbindungsmittel 8 mit einem Container 9 verbind- bzw. verriegelbar. Der Spreader 7 ist mittels einer bei der in Figur 1 gezeigten Ausführungsform des Portalhubwagens 1 am Spreader 7 selbst angeordneten Hubwinde 10 zwischen den vertikalen Stützen 3 des Rahmengestells 2 vertikal bewegbar.

Die beiden Fahrträger 6 des Portalhubwagens 1, von denen in Figur 1, wie bereits erwähnt, nur einer sichtbar ist, haben in der dargestellten Ausführungsform des Portalhubwagens 1 jeweils vier Räder 11, denen jeweils ein am Fahrträger 6 gehalterter Radträger 12 zugeordnet ist.

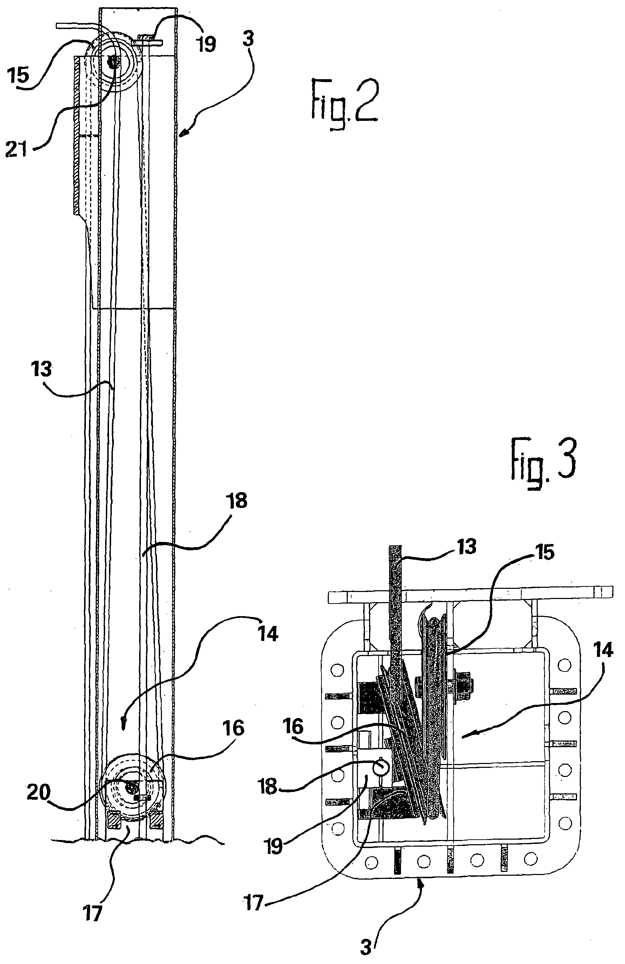

Zum Anschluß von am Spreader 7 vorgesehenen Aggregaten und Bauteilen an eine in den Figuren nicht gezeigte Energieversorgungsquelle des Portalhubwagens 1 und an eine Steuereinheit desselben ist ein Energieversorgungs- und/oder Signalleitungskabel 13 vorgesehen. Wie sich am besten aus den Figuren 2 und 3 ergibt, ist ein Teil dieses Energieversorgungs- und/oder Signalleitungskabels 13 innerhalb einer der vertikalen Stützen 3 des Rahmengestells 2 angeordnet, d.h., ein wesentlicher Längenabschnitt dieses Energieversorgungs- und/oder Signalleitungskabel 13 befindet sich stets innerhalb des in der betreffenden vertikalen Stütze 3 vorhandenen Hohlraums und stört nicht die Sicht des in der Fahrerkabine 5 befindlichen Fahrers. Darüber hinaus ist der betreffende Abschnitt des Energieversorgungs- und/oder Signalleitungskabels 13 innerhalb der vertikalen Stütze 3 gegen Außeneinflüsse geschützt, womit sich ein insgesamt reduzierter Wartungsaufwand für dieses Energieversorgungs- und/oder Signalleitungskabel 13 ergibt.

Aufgrund der im Betrieb des Portalhubwagens 1 häufigen Vertikalverstellung des Spreaders 7 muss die Länge des Energieversorgungs- und/oder Signalleitungskabels 13 stets an die jeweilige Vertikalposition des Spreaders 7 innerhalb des Rahmengestells 2 angepasst werden. Um sicherzustellen, dass das Energieversorgungs- und/oder Signalleitungskabel 13 immer in der erforderlichen Länge - und nicht länger - zur Verfügung steht, ist im Falle der in den Figuren 1 bis 3 gezeigten Ausführungsform des Portalhubwagens 1 innerhalb der betreffenden vertikalen Stütze 3 des Rahmengestells 2 eine Kabelspannvorrichtung 14 angeordnet. Zu dieser Kabelspannvorrichtung 14 gehören eine Umlenkrolle 15, eine Spannrolle 16, ein Gegengewicht 17 und eine Führung in Form einer Leitstange 18.

Innerhalb der Vertikalstütze 3 ist die Leitstange 18, die sich in Längsrichtung der vertikalen Stütze 3 erstreckt, durch geeignete Befestigungsmittel 19, von denen in Figur 2 eines dargestellt ist, befestigt. Auf dieser Leitstange 18 ist das Gegengewicht 17 in Vertikalrichtung verschieblich gelagert, wie am besten aus einer Zusammenschau der Figuren 2 und 3 hervorgeht. Am Gegengewicht 17 ist die mit dem Gegengewicht 17 an der Leitstange 18 in Vertikalrichtung verschiebliche Spannrolle 16 der Kabelspannvorrichtung 14 um ein Drehlager 20 drehbar gelagert.

Im oberen Bereich bzw. am oberen Endabschnitt der vertikalen Stütze 3 ist die ortsfeste Umlenkrolle 15 um ein weiteres Drehlager 21 drehbar gelagert.

Von der beispielsweise am Oberrahmen 4 des Rahmengestells 2 des Portalhubwagens 1 angeordneten Energieversorgungsquelle und der ebenfalls dort angeordneten Steuereinheit des Portalhubwagens 1 her wird das Energieversorgungs- und/oder Signalleitungskabel 13 am oberen Endabschnitt der vertikalen Stütze 3 in den in der vertikalen Stütze 3 vorhandenen Hohlraum ein- und vom Ort der Einführung her zur unterhalb der Umlenkrolle 15 angeordneten Spannrolle 16 hingeführt. Das Energieversorgungs- und/oder Signalleitungskabel 13 läuft um die Spannrolle 16 und von dort wiederum in aufwärtiger Richtung zur am oberen Endabschnitt der vertikalen Stütze 3 angeordneten ortsfesten Umlenkrolle 15. Mittels der Umlenkrolle 15 wird das Energieversorgungs- und/oder Signalleitungskabel 13 aus der vertikalen Stütze 3 heraus und zu einer am Spreader 7 vorgesehenen Führung geführt.

Je nach Vertikalposition des Spreaders 7 in Bezug auf das Rahmengestell 2 des Portalhubwagens 1 bewegt sich die mit dem Gegengewicht 17 versehene Spannrolle 16 in auf- oder in abwärtiger Richtung der vertikalen Stütze 3, so dass stets nur ein Abschnitt unbedingt benötigter Länge des Energieversorgungs- und/oder Signalleitungskabels 13 außerhalb der vertikalen Stütze 3, d.h. zwischen der vertikalen Stütze 3 und dem Spreader 7, angeordnet ist.

Durch die vorstehend beschriebene Kabelspannvorrichtung 14 wird sichergestellt, dass das Energieversorgungs- und/oder Signalleitungskabel 13 stets geordnet läuft, so dass die Gefahr mechanischer Beschädigungen etc. erheblich reduziert ist.

## Patentansprüche

1. Portalhubwagen (1) zum Einsatz in Containerterminals und für allgemeine Transportaufgaben, mit einem Rahmengestell (2) mit vertikalen Stützen (3), einem Spreader (7), der zwischen den vertikalen Stützen (3) des Rahmengestells (2) hängt und mit einem Container (9) verriegelbar ist, Hubwinden (10), mittels denen der Spreader (7) vertikal bewegbar ist, Fahrträgern (6), die am unteren Bereich des Rahmengestells (2) angeordnet sind und jeweils eine Vielzahl in einer Reihe angeordneter Räder (11) aufweisen, und einem Energieversorgungs- und/oder Signalleitungskabel (13), mittels dem der Spreader (7) an eine Energieversorgungsquelle und/oder eine Steuereinheit des Portalhubwages (1) angeschlossen ist, **dadurch gekennzeichnet, dass** dem Energieversorgungs- und/oder Signalleitungskabel (13) zum Spreader eine Kabelspannvorrichtung (14) zugeordnet ist, mittels der das Energieversorgungs- und/oder Signalleitungskabel (13) straffbar ist, dass die Kabelspannvorrichtung (14) nahe bzw. im Bereich einer spreaderseitigen Anbindung des Energieversorgungs- und/oder Signalleitungskabels (13) angeordnet ist, und dass die Kabelspannvorrichtung (14) und das Energieversorgungs- und/oder Signalleitungskabel (13) zum Spreader (7) zumindest teilweise in einer vertikalen Stütze (3) des Rahmengestells (2) angeordnet sind.

2. Portalhubwagen nach Anspruch 1, bei dem die Kabelspannvorrichtung (14) eine am oberen Endabschnitt der vertikalen Stütze (3) angeordnete feststehende Umlenkrolle (15) aufweist, um die das Energieversorgungs- und/oder Signalleitungskabel (13) geführt ist.

3. Portalhubwagen nach Anspruch 2, bei der die Kabelspannvorrichtung (14) eine unterhalb der Umlenkrolle (15) in Vertikalrichtung bewegliche Spannrolle (16) aufweist, auf die das Energieversorgungs- und/oder Signalleitungskabel (13) geführt ist und von der aus das Energieversorgungs- und/oder Signalleitungskabel (13) zur Umlenkrolle (15 geführt ist.

4. Portalhubwagen nach Anspruch 3, bei dem die Spannrolle (16) der Kabelspannvorrichtung (14) auf einer vertikalen, vorzugsweise als Leitstange (18) ausgebildeten Führung (18) in Vertikalrichtung beweglich ist

5. Portalhubwagen nach Anspruch 4, bei dem die Spannrolle (16) drehbar an einem Gegengewicht (17) sitzt, das in Vertikalrichtung verschieblich auf der Leitstange (18) geführt ist.

6. Portalhubwagen nach einem der Ansprüche 1 bis 5 bei dem das Energieversorgungs- und/oder Signalleitungskabel (13) aus der vertikalen Stütze (3) bzw. von der vertikalen Stütze (3) aus in die spreaderseitige Anbindung bzw. eine spreaderseitige Führung einläuft.

7. Portalhubwagen nach Anspruch 6, bei dem der in der vertikalen Stütze (3) des Rahmengestells (2) angeordnete Abschnitt des Energieversorgungs- und/oder Signalleitungskabels (13) in der Kabelspannvorrichtung (14) geführt ist.

8. Portalhubwagen nach einem der Ansprüche 6 oder 7, bei dem die Umlenkrolle (15) der in der vertikalen Stütze (3) des Rahmengestells (2) angeordneten Kabelspannvorrichtung (14) im oberen Endabschnitt der vertikalen Stütze (3) angeordnet ist und von der Umlenkrolle (15) aus das Energieversorgungs- und/oder Signalleitungskabel (13) spreaderseitig aus der vertikalen Stütze (3) austritt.

9. Portalhubwagen nach Anspruch 8, bei dem das Energieversorgungs- und/oder Signalleitungskabel (13) nach dessen Eintritt in die vertikale Stütze (3) zu der in Vertikalrichtung beweglichen Spannrolle (16) der in der vertikalen Stütze (3) des Rahmengestells (2) angeordneten Kabelspannvorrichtung (14) und von dort aus zur Umlenkrolle (15) geführt ist.

10. Portalhubwagen nach Anspruch 9, bei dem die vertikale, vorzugsweise als Leitstange (18) ausgebildete Führung (18) in der vertikalen Stütze (3) des Rahmengestells (2) angeordnet ist.

## Claims

1. Straddle carrier (1) for use in container terminals and for general transportation tasks, having a rack (2) with vertical columns (3), a spreader (7) which is suspended between the vertical columns (3) of the rack (2) and can be locked to a container (9), hoisting winches (10) by means of which the spreader (7) is movable vertically, carriage beams (6) which are arranged in the lower region of the rack (2) and each have a plurality of wheels (11) arranged in a row, and an energy supply and/or signal line cable (13) via which the spreader (7) is connected to an energy supply source and/or a control unit of the straddle carrier (1), **characterised in that** a cable tensioning device (14) is assigned to the energy supply and/or signal line cable (13) to the spreader, by means of which the energy supply and/or signal line cable (13) can be tensioned, that the cable tensioning device (14) is arranged close to or in the region of a spreader-side connection for the energy supply and/or signal line cable (13), and that at least parts of the cable tensioning device (14) and the energy supply and/or signal line cable (13) to the spreader (7) are arranged in a vertical column (3) of the rack (2).

2. Straddle carrier according to claim 1, in which the cable tensioning device (14) has a fixed deflection pulley (15) arranged on the top end section of the vertical column (3) about which the energy supply and/or signal line cable (13) is guided.

3. Straddle carrier according to claim 2, in which the cable tensioning device (14) has a tensioning roller (16) that is movable in the vertical direction below the deflection pulley (15), to which the energy supply and/or signal line cable (13) is routed and from which the energy supply and/or signal line cable (13) is routed to the deflection pulley (15).

4. Straddle carrier according to claim 3, in which the tensioning roller (16) of the cable tensioning device (14) is movable vertically on a vertical guide (18) that is preferably in the form of a guide rod (18).

5. Straddle carrier according to claim 4, in which the tensioning roller (16) is seated rotatably against a counterweight (17) which is guided slidably in the vertical direction on the guide rod (18).

6. Straddle carrier according to any one of claims 1 to 5, in which the energy supply and/or signal line cable (13) runs out of the vertical column (3) and runs from the vertical column (3) into the connection on the spreader-side or a guide on the spreader side.

7. Straddle carrier according to claim 6, in which the section of the energy supply and/or signal line cable (13) that is arranged in the vertical column (3) of the rack (2) is guided in the cable tensioning device (14).

8. Straddle carrier according to either of claims 6 or 7, in which the deflection pulley (15) of the cable tensioning device (14) arranged in the vertical column (3) of the rack (2) is arranged in the upper end section of the vertical column (3), and on the spreader side the energy supply and/or signal line cable (13) exits the vertical column (3) starting from the deflection pulley (15).

9. Straddle carrier according to claim 8, in which after entering the vertical column (3) the energy supply and/or signal line cable (13)) is routed to the vertically movable tensioning roller (16) of the cable tensioning device (14) arranged in the vertical column (3) of the rack (2),and from there to the deflection pulley (15).

10. Straddle carrier according to claim 9, in which the vertical guide (18), which is preferably in the form of a guide rod (18) is arranged in the vertical column (3) of the rack (2).

## Revendications

1. Chariot cavalier (1) pour utilisation dans des terminaux de conteneurs et pour des tâches de transport générales, avec un châssis de cadre (2) avec des montants verticaux (3), un palonnier de levage (7) qui est suspendu entre les montants verticaux (3) du châssis de cadre (2) et peut être verrouillé avec un conteneur (9), des treuils de levage (10) au moyen desquels le palonnier de levage (7) peut être déplacé verticalement, des supports de roulement (6) qui sont disposés sur la zone inférieure du châssis de cadre (2) et comportent respectivement une pluralité de roues (11) disposées en alignement et un câble d'alimentation en énergie et/ou de ligne de signaux (13) au moyen duquel le palonnier de levage (7) est connecté à une source d'alimentation en énergie et/ou une unité de commande du chariot cavalier (1) **caractérisé en ce qu'**un dispositif de tension de câble (14) est attribué au câble d'alimentation en énergie et/ou de ligne de signaux (13) pour le palonnier de levage, au moyen duquel le câble d'alimentation en énergie et/ou de ligne de signaux (13) peut être tendu, **en ce que** le dispositif de tensionde câble (14) est disposé près ou dans la zone d'un point de liaison côté palonnier du câble d'alimentation en énergie et/ou de ligne de signaux (13) et **en ce que** le dispositif de tension de câble (14) et le câble d'alimentation en énergie et/ou de ligne de signaux (13) pour le le palonnier de levage (7) sont disposés au moins en partie dans un montant vertical (3) du châssis de cadre (2).

2. Chariot cavalier selon la revendication 1 pour lequel le dispositif de tension de câble (14) comporte une poulie de renvoi (15) fixe disposée sur la section terminale supérieure du montant vertical (3) autour de laquelle est guidé le câble d'alimentation en énergie et/ou de ligne de signaux (13).

3. Chariot cavalier selon la revendication 2 pour lequel le dispositif de tension de câble (14) comporte un galet de tension (16) en dessous de la poulie de renvoi (15) mobile dans le sens vertical, sur lequel le câble d'alimentation en énergie et/ou de ligne de signaux (13) est guidé et à partir duquel le câble d'alimentation en énergie et/ou de ligne de signaux (13) est guidé vers la poulie de renvoi (15).

4. Chariot cavalier selon la revendication 3 pour lequel le galet de tension (16) du dispositif de tension de câble (14) est mobile dans le sens vertical sur un guidage (18) vertical, constitué de préférence comme barre directrice (18).

5. Chariot cavalier selon la revendication 4 pour lequel le galet de tension (16) est logé de manière à pouvoir torner sur un contre-poids (17) qui est guidé de manière mobile dans le sens vertical sur la barre directrice (18).

6. Chariot cavalier selon l'une quelconque des revendications 1 à 5 pour lequel le câble d'alimentation en énergie et/ou de ligne de signaux (13) s'engage à partir du montant vertical (3) ou depuis le montant vertical (3) dans le point de liaison côté palonnier ou un guidage côté palonnier.

7. Chariot cavalier selon la revendication 6 pour lequel la section du câble d'alimentation en énergie et/ou de ligne de signaux (13) disposée dans le montant vertical (3) du châssis de cadre (2) est guidée dans le dispositif de tension de câble (14).

8. Chariot cavalier selon l'une quelconque des revendications 6 ou 7 pour lequel la poulie de renvoi (15) du dispositif de tension de câble (14) disposé dans le montant vertical (3) du châssis de cadre (2) est disposé dans la section terminale supérieure du montant vertical (3) et de la poulie de renvoi (15), le câble d'alimentation en énergie et/ou de ligne de signaux (13) sort du montant vertical (3) côté du palonnier.

9. Chariot cavalier selon la revendication 8 pour lequel le câble d'alimentation en énergie et/ou de ligne de signaux (13) après son entrée dans le montant vertical (3) est guidé vers le galet de tension (16) mobile dans le sens vertical du dispositif de tension de câble (14) disposé dans le montant vertical (3) du châssis de cadre (2) et de là vers la poulie de renvoi (15).

10. Chariot cavalier selon la revendication 9 pour lequel le guidage (18) vertical, constitué de préférence comme barre directrice (18) est disposé dans le montant vertical (3) du châssis de cadre (2).
